# EUROPEAN PATENT SPECIFICATION

(11) **EP 3 410 791 B1**
(45) Date of publication and mention of the grant of the patent: **02.12.2026**
(21) Application number: 17743571.6
(22) Date of filing: 11.01.2017
(51) Int. Cl.: H04W 56/00

(54) **SYNCHRONIZATION METHOD AND DEVICE**
SYNCHRONISATIONSVERFAHREN UND -VORRICHTUNG
PROCÉDÉ ET DISPOSITIF DE SYNCHRONISATION

(30) Priority: 29.01.2016 CN 201610067213
(43) Date of publication of application: 05.12.2018
(73) Proprietor: Datang Mobile Communications Equipment Co., Ltd., Beijing 100085 (CN)
(72) Inventor: LI, Yuanyuan, Beijing 100191 (CN); ZHOU, Haijun, Beijing 100191 (CN); ZHAO, Li, Beijing 100191 (CN); PENG, Ying, Beijing 100191 (CN); FANG, Jiayi, Beijing 100191 (CN)
(74) Representative: Ipsilon
(86) International application number: PCT/CN2017/070899
(87) International publication number: WO 2017/128956

(56) References cited:
- WO-A1-2014/182342
- CN-A- 102 056 285
- CN-A- 102 271 391
- CN-A- 104 735 774
- US-A1- 2015 264 588

## Description

### Field

The present disclosure relates to the field of communications, and particularly to a synchronization method and device.

### Background

The Global Navigation Satellite System (GNSS) introduced into Vehicle-to-Vehicle (V2V) communication systems has led to more levels of synchronization precision in the V2V communication systems than in the Device to Device (D2D) systems. The timing can be referred from the base station to form a synchronization scheme, or the timing can be referred directly from the GNSS to form the synchronization scheme. However, currently there is neither a reasonable mechanism to assist a terminal in determining a scheme the terminal is in, nor a reasonable approach to assist the terminal in determining its own synchronization level and performing subsequent timing adjustment operations. In a vehicle and road coordination system, information about vehicles and roads is obtained using technologies such as radio communication, and the information about vehicles and roads is exchanged and shared between vehicles, and between a vehicle and a road side device, so that the vehicles are coordinated intelligently and the vehicles cooperate with the infrastructure intelligently to optimize utilization of system resources, improve safety of traffic on the roads, and alleviate traffic jams. Such a system is a Vehicle-to-everything (V2X) system, in the broadest sense of the word, and is also an inevitable trend of future development of intelligent transportation.

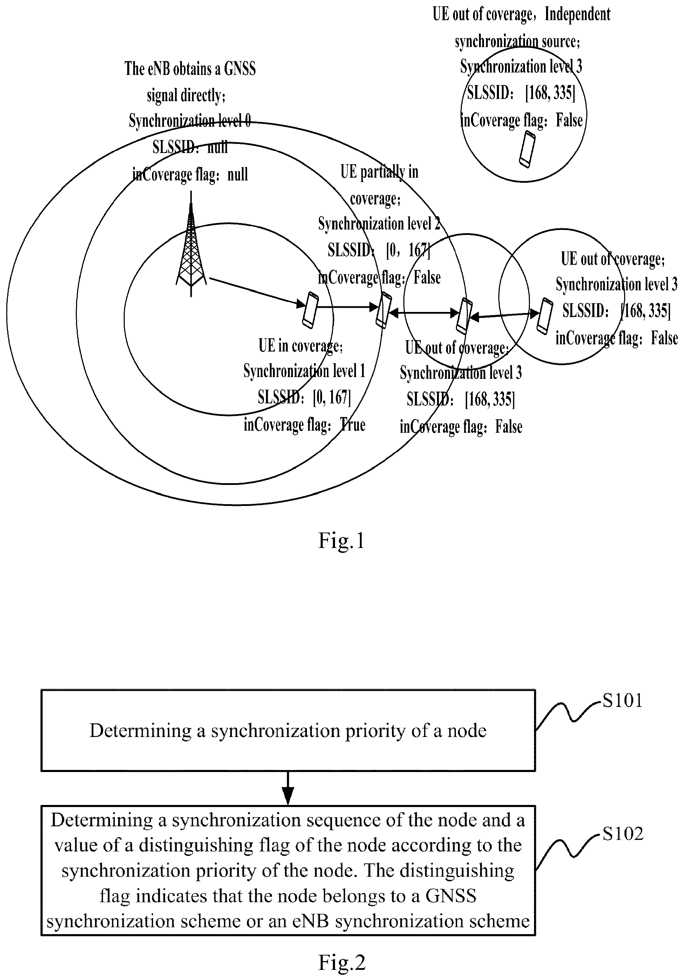

Standards of D2D communication established in researches on the 3rd Generation Partnership Project (3GPP) standards involve three synchronization levels in total. As illustrated in Fig. 1, a terminal in the coverage of a base station is at a level 1, a terminal partially in the coverage of the base station is at a level 2, and a terminal out of the coverage of the base station is at a level 3. The three levels are distinguished by Side Link Synchronization Signal (SLSS) sequences and values of an in-coverage flag, just as follows.

The terminal in the coverage of the base station transmits a synchronization sequence in an id_net set, and the value of the in-coverage flag is True. A synchronization sequence transmitted by the terminal partially in the coverage of the base station is the same as a sequence transmitted by synchronization reference User Equipment (UE) selected by the terminal, but the value of the in-coverage flag is False. Regarding the terminal out of the coverage of the base station, if synchronization reference UE selected by the terminal out of the coverage of the base station is a terminal partially in the coverage of the base station, then a value of a synchronization sequence transmitted by the terminal out of the coverage of the base station equals to a value of a synchronization sequence transmitted by the reference UE plus 168, and a value of the in-coverage flag is False; if the synchronization reference UE selected by the terminal out of the coverage of the base station is a terminal out of the coverage of the base station, then the synchronization sequence transmitted by the terminal out of the coverage of the base station is the same as the sequence transmitted by the selected reference UE, and the value of the in-coverage flag is False; and if the terminal out of the coverage of the base station does not select any synchronization reference UE, then it selects any one sequence in an id_oon set as its own synchronization sequence, and transmits the selected synchronization sequence, where the value of the in-coverage flag is False.

Communication over an internet of vehicles might have two synchronization schemes, i.e., a synchronization scheme whose timing refers from the GNSS, and a synchronization scheme whose timing refers from the base station. Apparently the D2D communication, whose timing refers from the base station, fails to take into account a UE synchronized with a GNSS but only transmits the timing of the base station to the terminals, thus unable to synchronize the V2X system.

Document US2015/0264588A1, discloses a Device to Device (D2D) user equipment (UE) configured to support synchronization (sync) in a D2D network. The D2D UE includes an antenna configured to communicate via a D2D communication. The D2D UE also includes processing circuitry configured to communicate with a second portable terminal via the D2D communication. The processing circuitry is further configured to: derive a transmission (TX) timing from a synchronization (sync) source; and transmit a D2D Sync Signal (D2DSS) and Physical D2D Sync Channel (PD2DSCH) configured to indicate a hop number from the sync source. The hop number is indicated via the preamble sequence set and the indicator in PD2DSCH.

### Summary

Embodiments of the disclosure provide a synchronization method and device so as to distinguish between synchronization schemes and synchronization levels of nodes in a V2V communication system to enable rapid synchronization in the V2V communication system.

An embodiment of the disclosure provides a synchronization method applicable to a V2V communication system, where the V2V communication system includes a GNSS synchronization scheme and an eNB synchronization scheme. The method includes: determining a synchronization priority of a node according to a synchronization signal received by the node; and determining a synchronization sequence of the node and a value of a distinguishing flag of the node for a synchronization signal to be sent by the node according to the synchronization priority of the node. The distinguishing flag is configured for indicating that the node belongs to the GNSS synchronization scheme or the eNB synchronization scheme. Determining the synchronization priority of the node according to the synchronization signal includes: determining that the synchronization priority of the node is a preset first priority, a preset second priority, a preset third priority, or a preset fourth priority according to the synchronization signal. determining the synchronization sequence of the node and the value of the distinguishing flag of the node according to the synchronization priority of the node includes: when the synchronization priority of the node is the preset first priority, determining that the synchronization sequence of the node is a synchronization sequence in an id_net set excluding (X1-168) and (X2-168), and determining that the value of the distinguishing flag of the node is True; when the synchronization priority of the node is the preset second priority, determining that the synchronization sequence of the node is a synchronization sequence X1 in an id_oon set, and determining that the value of the distinguishing flag of the node is False; when the synchronization priority of the node is the preset third priority, determining that the synchronization sequence of the node is a synchronization sequence X2 in the id_oon set, and determining that the value of the distinguishing flag of the node is False; and when the synchronization priority of the node is the preset fourth priority, determining that the value of the distinguishing flag of the node is False, and determining the synchronization sequence of the node according to one of following schemes: in a first scheme, if a synchronization reference node of the node has the preset first priority, then the synchronization sequence of the node is the same sequence as a synchronization sequence of the synchronization reference node, or the synchronization sequence of the node equals to the synchronization sequence of the synchronization reference node plus 168; in a second scheme, if the synchronization reference node of the node has the preset third priority, then the synchronization sequence of the node is set to be a fixed value X3; in a third scheme, if the synchronization reference node of the node has the preset fourth priority, then, if the synchronization sequence of the synchronization reference node belongs to the id_net set, then the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node, where the value is not equal to X1 or X2. Or, determining the synchronization sequence of the node and the value of the distinguishing flag of the node according to the synchronization priority of the node includes: when the synchronization priority of the node is the preset first priority, determining that the synchronization sequence of the node is a synchronization sequence in an id_net set excluding X1 and X2, and determining that the value of the distinguishing flag of the node is False; when the synchronization priority of the node is the preset second priority, determining that the synchronization sequence of the node is the synchronization sequence X1 in the id_net set, and determining that the value of the distinguishing flag of the node is True; when the synchronization priority of the node is the preset third priority, determining that the synchronization sequence of the node is the synchronization sequence X2 in the id_net, and determining that the value of the distinguishing flag of the node is True; and when the synchronization priority of the node is the preset fourth priority, determining that the value of the distinguishing flag of the node is True, and determining the synchronization sequence of the node according to one of following schemes: in a first scheme, if a synchronization reference node of the node has the preset first priority, then the synchronization sequence of the node is a synchronization sequence in the id_net set, and the synchronization sequence of the node is the same as a synchronization sequence of the synchronization reference node, or the synchronization sequence of the node is a synchronization sequence in an id_oon set, and the synchronization sequence of the node equals to the synchronization sequence of the synchronization reference node plus 168; in a second scheme, if the synchronization reference node of the node has the preset third priority, then the synchronization sequence of the node is a synchronization sequence in the id_oon set, and the synchronization sequence of the node equals to a fixed value of (X2+168); in a third scheme, if the synchronization reference node of the node has the preset fourth priority, then, if the synchronization sequence of the synchronization reference node belongs to the id_net set, then the synchronization sequence of the node is a synchronization sequence in the id_oon set, and the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node. X1 and X2 are positive integers greater than or equal to 1, the id_net set is a set of synchronization sequences within network coverage, and the id_oon set is a set of synchronization sequences outside the network coverage.

With this method, the synchronization priority of the node is determined, and the synchronization sequence of the node and the value of the distinguishing flag of the node are determined according to the synchronization priority of the node. The distinguishing flag indicates that the node belongs to the GNSS synchronization scheme or the eNB synchronization scheme. As such, synchronization schemes and synchronization levels of nodes in V2V communication are distinguished and rapid synchronization in the V2V communication system is enabled.

In an embodiment, when the synchronization priority of the node is the preset first priority, the synchronization sequence of the node is configured by the eNB via system information.

An embodiment of the disclosure provides a synchronization device applicable to a V2V communication system, where the V2V communication system includes a GNSS synchronization scheme and an eNB synchronization scheme. The device includes: a first unit configured to determine a synchronization priority of a node according to a synchronization signal received by the node; and a second unit configured to determine a synchronization sequence of the node and a value of a distinguishing flag of the node for a synchronization signal to be sent by the node according to the synchronization priority of the node. The distinguishing flag is configured for indicating that the node belongs to the GNSS synchronization scheme or the eNB synchronization scheme. The first unit is configured to determine that the synchronization priority of the node is a preset first priority, a preset second priority, a preset third priority, or a preset fourth priority according to the synchronization signal. The second unit is configured to:when the synchronization priority of the node is the preset first priority, determine that the synchronization sequence of the node is a synchronization sequence in an id_net set excluding (X1-168) and (X2-168), and determine that the value of the distinguishing flag of the node is True; when the synchronization priority of the node is the preset second priority, determine that the synchronization sequence of the node is a synchronization sequence X1 in an id_oon set, and determine that the value of the distinguishing flag of the node is False; when the synchronization priority of the node is the preset third priority, determine that the synchronization sequence of the node is a synchronization sequence X2 in the id_oon set, and determine that the value of the distinguishing flag of the node is False; and when the synchronization priority of the node is the preset fourth priority, determine that the value of the distinguishing flag of the node is False, and determine the synchronization sequence of the node according to one of following schemes: in a first scheme, if a synchronization reference node of the node has the preset first priority, then the synchronization sequence of the node is the same sequence as a synchronization sequence of the synchronization reference node, or the synchronization sequence of the node equals to the synchronization sequence of the synchronization reference node plus 168; in a second scheme, if the synchronization reference node of the node has the preset third priority, then the synchronization sequence of the node is set to be a fixed value X3; in a third scheme, if the synchronization reference node of the node has the preset fourth priority, then, if the synchronization sequence of the synchronization reference node belongs to the id_net set, then the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node, where the value is not equal to X1 or X2. Or, the second unit is configured to: when the synchronization priority of the node is the preset first priority, determine that the synchronization sequence of the node is a synchronization sequence in an id_net set excluding X1 and X2, and determine that the value of the distinguishing flag of the node is False; when the synchronization priority of the node is the preset second priority, determine that the synchronization sequence of the node is the synchronization sequence X1 in the id_net set, and determine that the value of the distinguishing flag of the node is True; when the synchronization priority of the node is the preset third priority, determine that the synchronization sequence of the node is the synchronization sequence X2 in the id_net, and determine that the value of the distinguishing flag of the node is True; and when the synchronization priority of the node is the preset fourth priority, determine that the value of the distinguishing flag of the node is True, and determine the synchronization sequence of the node according to one of following schemes: in a first scheme, if a synchronization reference node of the node has the preset first priority, then the synchronization sequence of the node is a synchronization sequence in the id_net set, and the synchronization sequence of the node is the same as a synchronization sequence of the synchronization reference node, or the synchronization sequence of the node is a synchronization sequence in an id_oon set, and the synchronization sequence of the node equals to the synchronization sequence of the synchronization reference node plus 168; in a second scheme, if the synchronization reference node of the node has the preset third priority, then the synchronization sequence of the node is a synchronization sequence in the id_oon set, and the synchronization sequence of the node equals to a fixed value of (X2+168); in a third scheme, if the synchronization reference node of the node has the preset fourth priority, then, if the synchronization sequence of the synchronization reference node belongs to the id_net set, then the synchronization sequence of the node is a synchronization sequence in the id_oon set, and the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node. X1 and X2 are positive integers greater than or equal to 1, the id_net set is a set of synchronization sequences within network coverage, and the id_oon set is a set of synchronization sequences outside the network coverage.

In an embodiment, when the synchronization priority of the node is the preset first priority, the synchronization sequence of the node, determined by the second unit, is configured by the eNB via system information.

### Brief Description of the Drawings

Fig. 1 is a schematic diagram of synchronization priorities and synchronization sequences in a Release 12 (R12) of an existing technology.
Fig. 2 is a schematic flow chart of a synchronization method according to an embodiment of the disclosure.
Fig. 3 is a schematic diagram of an example of setting a synchronization sequence and an in-coverage flag in GNSS or GNSS-equivalent based synchronization according to an embodiment of the disclosure.
Fig. 4 is a schematic diagram of an example of setting a synchronization sequence and the value of an in-coverage flag in eNB based synchronization according to an embodiment of the disclosure.
Fig. 5 is a schematic diagram of an example of setting a synchronization sequence and the value of an in-coverage flag in eNB based synchronization according to an embodiment of the disclosure.
Fig. 6 is a schematic diagram of an example of setting a synchronization sequence and the value of an in-coverage flag in GNSS or GNSS-equivalent based synchronization according to an embodiment of the disclosure.
Fig. 7 is a schematic diagram of an example of setting a synchronization sequence and the value of an in-coverage flag in eNB based synchronization according to an embodiment of the disclosure.
Fig. 8 is a schematic diagram of an example of setting a synchronization sequence and the value of an in-coverage flag in eNB based synchronization according to an embodiment of the disclosure.
Fig. 9 is a schematic structural diagram of a synchronization device according to an embodiment of the disclosure.
Fig. 10 is a schematic structural diagram of another synchronization device according to an embodiment of the disclosure.

### Detailed Description of the Embodiments

Embodiments of the disclosure provide a synchronization method and device so as to distinguish between synchronization schemes and synchronization levels of nodes in V2V communication. The technical solutions according to the embodiments of the disclosure are generally intended to distinguish between synchronization schemes and synchronization levels of nodes in V2V communication. Possible synchronization levels in a V2V synchronization scheme include Priority 1a, Priority 1, Priority 2, and Priority 3. A distinguishing flag is introduced herein to indicate whether a system's timing refers from timing of a base station or from a GNSS. In order to be consistent with the D2D standards, the in-coverage flag is used as the distinguishing flag, so values of the in-coverage flag according to the embodiments of the disclosure indicate something different from what values of the in-coverage flag in the D2D system indicate. According to the embodiments of the disclosure, methods for distinguishing between the synchronization schemes and synchronization levels of nodes in V2V communication include the following two approaches.

### First Approach

Priority 1a: an SLSS identifier (ID) of a node at Priority 1a is selected from the id_net set excluding (X1-168) and (X2-168) and is configured by an eNB via system information. The value of the in-coverage flag is True.

Priority 1: an SLSS ID of a node at Priority 1 is selected from the id_oon set and is set to be the fixed value X1. The value of the in-coverage flag is set to False.

Priority 2: an SLSS ID of a node at Priority 2 is selected from the id_oon set and is set to the fixed value X2. The value of the in-coverage flag is set to False.

Priority 3: the value of the in-coverage flag of a node at Priority 3 is set to False, and an SLSS ID of the node at Priority 3 depends on the synchronization reference UE according to one of the following schemes.

In a first scheme, the synchronization reference UE of the node at Priority 3 is a node at Priority 1a, then, a synchronization sequence of the node at Priority 3 is the same as a synchronization sequence of the node at Priority 1a; or, a value of the synchronization sequence of the node at Priority 3 equals to an SLSS ID of the node at Priority 1a plus 168. In a second scheme, the synchronization reference UE of the node at Priority 3 is a node at Priority 2, then the synchronization sequence of the node at Priority 3 is set to be a fixed value X3. In a third scheme, the synchronization reference UE of the node at Priority 3 is a node at Priority 3, then: if the SLSS ID of the synchronization reference UE of the node at Priority 3 belongs to the id_net set, then the value of the synchronization sequence of the node at Priority 3 equals to the ID of the synchronization sequence of the synchronization reference UE, plus 168plus 168; or, if the SLSS of the synchronization reference UE of the node at Priority 3 belongs to the id_oon set, then the value of the synchronization sequence of the node at Priority 3 is the same as the SLSS ID of the synchronization reference UE. In a fourth scheme, the node at Priority 3 operates as an independent synchronization source and selects in a uniform distribution a value randomly in the range [168, 335] excluding X1 and X2 as the value of the synchronization sequence of the node at Priority 3.

### Second Approach

Priority 1a: an SLSS ID of a node at Priority 1a is selected from the id_net set excluding X1 and X2 and is configured by an eNB via system information. The value of the in-coverage flag is False.

Priority 1: a synchronization sequence of a node at Priority 1 is selected from the id_net sequence, and is set to be the fixed value X1, and the value of the in-coverage flag is set to True.

Priority 2: a synchronization sequence of a node at Priority 2 is selected from the id_net sequence, and is set to be the fixed value X2, and the value of the in-coverage flag is set to True.

Priority 3: the in-coverage flag of a node at Priority 3 is set to True, and a synchronization sequence of the node at Priority 3 depends on the synchronization reference UE of the node at Priority 3 according to one of the following schemes.

In a first scheme, the synchronization reference UE of the node at Priority 3 is a node at Priority 1a, then: the synchronization sequence of the node at Priority 3 is selected from the id_net set, and the synchronization sequence of the node at Priority 3 is the same sequence as a synchronization sequence of the node at Priority 1a; or, the synchronization sequence of the node at Priority 3 is selected from the id_oon set, and the value of the synchronization sequence of the node at Priority 3 equals to the ID of the synchronization sequence of the node at Priority 1a plus 168. In a second scheme, the synchronization reference UE of the node at Priority 3 is a node at Priority 2, and the synchronization sequence of the node at Priority 3 is selected from the id_oon sequence, and is particularly selected as a synchronization sequence having the value of X2+168. In a third scheme, the synchronization reference UE of the node at Priority 3 is a node at Priority 3, then: if an SLSS of the synchronization reference UE at Priority 3, received by the node at Priority 3, belongs to the id_net set, the synchronization sequence of the node at Priority 3 is selected from the id_oon set, and the value of the synchronization sequence of the node at Priority 3 equals to the ID of the synchronization sequence of the synchronization reference UE at Priority 3 plus 168; or, if the SLSS of the synchronization reference UE of the node at Priority 3 belongs to the id_oon set, the synchronization sequence of the node at Priority 3 is the same as the received SLSS ID of the synchronization reference UE at Priority 3. In a fourth scheme, the node at Priority 3 operates as an independent synchronization source and selects in a uniform distribution a value randomly in the range [168, 335] of the id_oon set as the synchronization sequence of the independent synchronization source.

In summary, referring to Fig. 2, a synchronization method according to an embodiment of the disclosure includes the following operations.

S101: determining a synchronization priority of a node.

S102: determining a synchronization sequence of the node and a value of a distinguishing flag of the node according to the synchronization priority of the node. The distinguishing flag indicates that the node belongs to a GNSS synchronization scheme or an eNB synchronization scheme.

In an embodiment, determining the synchronization priority of the node includes: determining that the synchronization priority of the node is a preset first priority, a preset second priority, a preset third priority, or a preset fourth priority.

In an embodiment, determining the synchronization sequence of the node and the value of the distinguishing flag of the node according to the synchronization priority of the node includes: when the synchronization priority of the node is the first priority, determining that the synchronization sequence of the node is a synchronization sequence in an id_net set excluding (X1-168) and (X2-168), and determining that the value of the distinguishing flag of the node is True; when the synchronization priority of the node is the second priority, determining that the synchronization sequence of the node is a synchronization sequence X1 in an id_oon set, and determining that the value of the distinguishing flag of the node is False; when the synchronization priority of the node is the third priority, determining that the synchronization sequence of the node is a synchronization sequence X2 in the id_oon set, and determining that the value of the distinguishing flag of the node is False; and when the synchronization priority of the node is the fourth priority, determining that the value of the distinguishing flag of the node is False, and determining the synchronization sequence of the node according to one of following schemes: in a first scheme, if a synchronization reference node of the node has the first priority, then the synchronization sequence of the node is the same sequence as a synchronization sequence of the synchronization reference node, or the synchronization sequence of the node equals to the synchronization sequence of the synchronization reference node plus 168; in a second scheme, if the synchronization reference node of the node has the third priority, then the synchronization sequence of the node is set to be a fixed value X3; in a third scheme, if the synchronization reference node of the node has the fourth priority, then, if the synchronization sequence of the synchronization reference node belongs to the id_net set, then the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node, where the value is not equal to X1 or X2.

In an embodiment, determining the synchronization sequence of the node and the value of the distinguishing flag of the node according to the synchronization priority of the node includes: when the synchronization priority of the node is the first priority, determining that the synchronization sequence of the node is a synchronization sequence in an id_net set excluding X1 and X2, and determining that the value of the distinguishing flag of the node is False; when the synchronization priority of the node is the second priority, determining that the synchronization sequence of the node is the synchronization sequence X1 in the id_net set, and determining that the value of the distinguishing flag of the node is True; when the synchronization priority of the node is the third priority, determining that the synchronization sequence of the node is the synchronization sequence X2 in the id_net, and determining that the value of the distinguishing flag of the node is True; and when the synchronization priority of the node is the fourth priority, determining that the value of the distinguishing flag of the node is True, and determining the synchronization sequence of the node according to one of following schemes: in a first scheme, if a synchronization reference node of the node has the first priority, then the synchronization sequence of the node is a synchronization sequence in the id_net set, and the synchronization sequence of the node is the same as a synchronization sequence of the synchronization reference node, or the synchronization sequence of the node is a synchronization sequence in an id_oon set, and the synchronization sequence of the node equals to the synchronization sequence of the synchronization reference node plus 168; in a second scheme, if the synchronization reference node of the node has the third priority, then the synchronization sequence of the node is a synchronization sequence in the id_oon set, and the synchronization sequence of the node equals to a fixed value of (X2+168); in a third scheme, if the synchronization reference node of the node has the fourth priority, then, if the synchronization sequence of the synchronization reference node belongs to the id_net set, then the synchronization sequence of the node is a synchronization sequence in the id_oon set, and the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node.

In an embodiment, when the synchronization priority of the node is the first priority, the synchronization sequence of the node is configured by the eNB via system information.

Several embodiments are described below as examples.

### A first embodiment relating to GNSS or GNSS-equivalent based synchronization

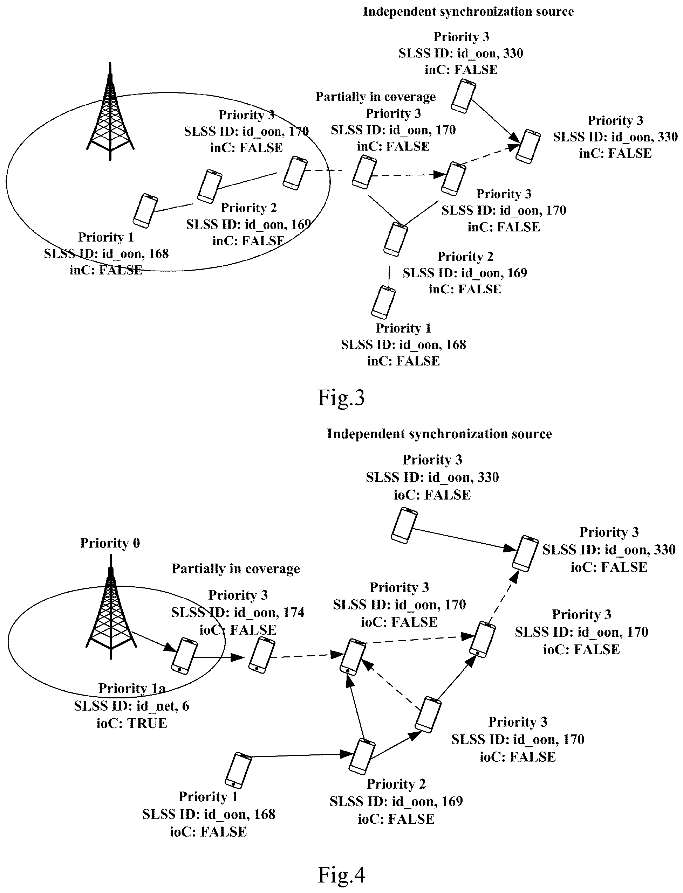

Fig. 3 illustrates a particular implementation of the first embodiment. Since the synchronization priorities of GNSS or GNSS-equivalent based synchronization are independent of network coverage conditions, the in-coverage flag does not need to indicate "in coverage", " partially in coverage", or "out of coverage", and the value of the in-coverage flag is set to False to indicate GNSS or GNSS-equivalent based synchronization.

The three synchronization priorities need to be distinguished from each other by using an SLSS, and in order to reuse the SLSS design of D2D in the R12 as much as possible, the SLSS is set as follows: for a node at Priority 1, an SLSS ID is selected from the id_oon sequence and is set to be the fixed value X1, and the value of the in-coverage flag is set to False.

For a node at Priority 2, the SLSS ID is selected from the id_oon sequence and is set to be the fixed value X2, and the value of the in-coverage flag is set to False.

For a node at Priority 3, the value of the in-coverage flag is set to False, and the SLSS ID is selected from the id_oon sequence. The SISS ID is set according to the synchronization reference UE as follows: when the synchronization reference UE is a node at Priority 2, the SLSS ID is selected from the id_oon sequence, and is set to be the fixed value X3; or, when the synchronization reference UE is a node at Priority 3, the SLSS ID is the same as the ID of a received SLSS of the synchronization reference UE at Priority 3; or, when the node at Priority 3 operates as an independent synchronization source, a uniformly distributed value in the range of id_oon is selected randomly in the range [168, 335] as a synchronization sequence of the independent synchronization source.

### A second embodiment relating to eNB based synchronization

Fig. 4 illustrates an implementation of the second embodiment. Nodes in an eNB based synchronization scheme have four priorities, where the value of the in-coverage flag of a node at Priority 1, 2, or 3 is set in the same way as the value of the in-coverage flag of a node at Priority 1, 2, or 3 in GNSS or GNSS-equivalent synchronization is set according to the first embodiment.

An SLSS ID of a node at Priority 1a is selected from the id_net set excluding (X1-168) and (X2-168), and is configured by an eNB via system information, and the value of the in-coverage flag is set to True.

An SLSS ID of a node at Priority 1 or at Priority 2 is set in the same way as an SLSS ID in GNSS or GNSS-equivalent synchronization according to the first embodiment.

For a node at Priority 3, when a synchronization reference UE is a node at Priority 1a, the SLSS ID of the node at Priority 3 equals to the ID of a synchronization sequence of the synchronization reference node at Priority 1a plus 168; or, when the synchronization reference UE is a node at Priority 2, the SLSS ID of the node at Priority 3 is selected from the id_oon sequence and is set to be the fixed value X3, and the value of the in-coverage flag is set to False; or, when the synchronization reference UE is a node at Priority 3, and an SLSS thereof belongs to the id_oon set, an SLSS ID of the node at Priority 3 equals to the received SLSS ID of the synchronization reference UE at Priority 3; or, when the node operates as an independent synchronization source, a uniformly distributed value in the range of id_oon is selected randomly in the range [168, 335] as a synchronization sequence of the independent synchronization source.

### A third embodiment relating to eNB based synchronization

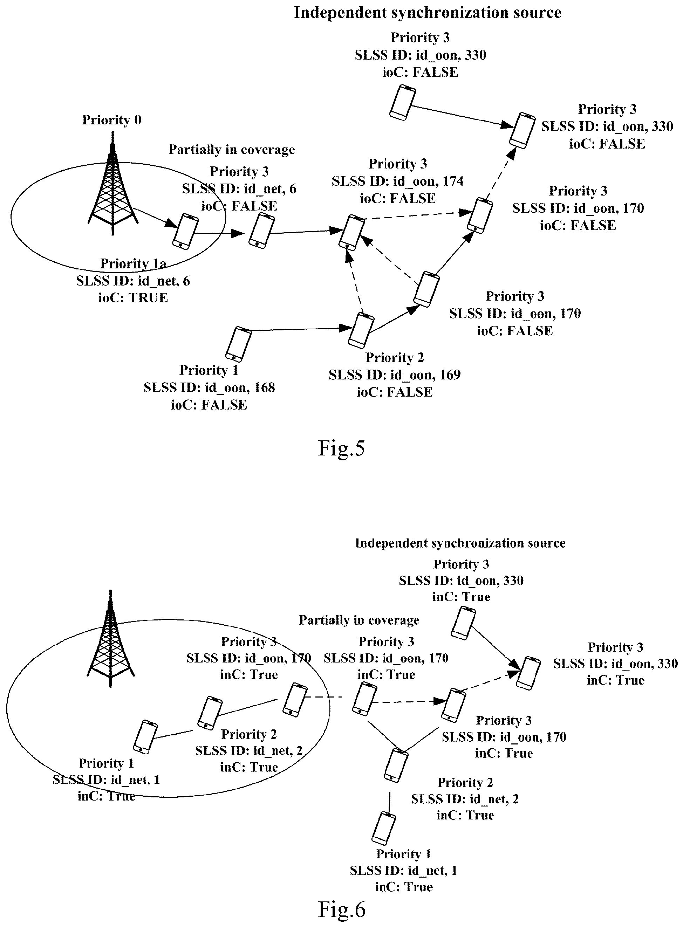

Fig. 5 illustrates an implementation of the third embodiment. Nodes in eNB based synchronization have four priorities, where the value of the in-coverage flag of a node at Priority 1, 2, or 3 is set in the same way as the value of the in-coverage flag of a node at Priority 1, 2, or 3 in GNSS or GNSS-equivalent synchronization is set according to the first embodiment.

An SLSS ID of a node at Priority 1a is selected from the id_net set excluding (X1-168) and (X2-168) and is configured by an eNB via system information, and the value of the in-coverage flag is set to True.

An SLSS ID of a node at Priority 1 or Priority 2 is set in the same way as an SLSS ID in GNSS or GNSS-equivalent synchronization according to the first embodiment.

For a node at Priority 3, when a synchronization reference UE of the node at Priority 3 is a node at Priority 1a, the node at Priority 3 selects its synchronization sequence from the id_net set, where the synchronization sequence of the node at Priority 3 is the same as a synchronization sequence of the node at Priority 1a; or, when the synchronization reference UE of the node at Priority 3 is a node at Priority 2, the node at Priority 3 selects the synchronization sequence from the id_oon sequence, where the synchronization sequence of the node at Priority 3 is set to be the fixed value X3, and the value of the in-coverage flag is set to False; or, when the synchronization reference UE of the node at Priority 3 is a node at Priority 3, and an SLSS thereof belongs to the id_net set, the value of the synchronization sequence selected by the node at Priority 3 equals to the ID of a synchronization sequence of the synchronization reference UE plus 168; or, when the node operates as an independent synchronization source, a uniformly distributed value in the range of id_oon is selected randomly in the range [168, 335] as a synchronization sequence of the independent synchronization source.

### Fourth Embodiment

Fig. 6 illustrates an implementation of the fourth embodiment. The three synchronization priorities need to be distinguished from each other using an SLSS, and in order to reuse the SLSS design of D2D in the R12 as much as possible, the SLSS is set as follows.

For a node at Priority 1, the synchronization sequence is selected from the id_net sequence and is set to be the fixed value X1, and the value of the in-coverage flag is set to True.

For a node at Priority 2, the synchronization sequence is selected from the id_net sequence and is set to be the fixed value X2, and the value of the in-coverage flag is set to True.

For a node at Priority 3, the value of the in-coverage flag is set to True. The synchronization sequence is selected from the id_oon sequence, and is set as follows according to the synchronization reference UE: when the synchronization reference UE is a node at Priority 2, the synchronization sequence having the value of X2+168 is selected as the synchronization sequence of the node at Priority 3; or, when the synchronization reference UE is a node at Priority 3, the synchronization sequence selected as the synchronization sequence of the node at Priority 3 is the same as a received SLSS ID of the synchronization reference UE at Priority 3; or, when the node operates as an independent synchronization source, a uniformly distributed value in the range of id_oon is selected randomly in the range [168, 335] as a synchronization sequence of the independent synchronization source.

### Fifth Embodiment

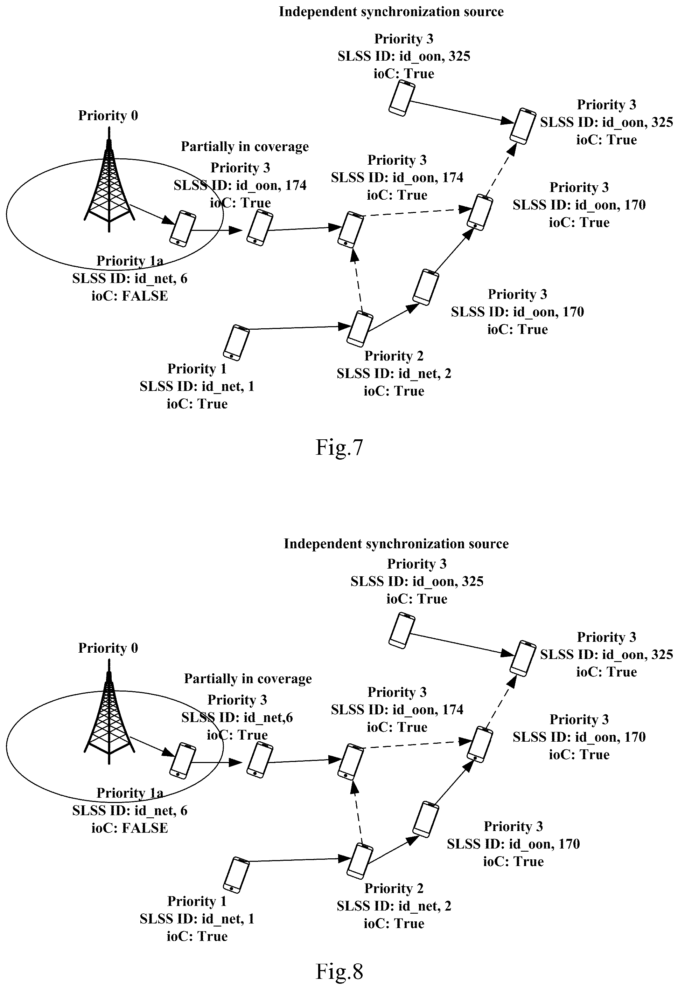

Fig. 7 illustrates an implementation of the fifth embodiment. Nodes in eNB based synchronization have four priorities, where the value of the in-coverage flag of a node at Priority 1, 2, or 3 is set in the same way as the value of the in-coverage flag of a node at Priority 1, 2, or 3 in GNSS or GNSS-equivalent synchronization is set according to the fourth embodiment.

An SLSS ID of a node at Priority 1a is selected from id_net excluding X1 and X2 and is configured by an eNB via system information, and the value of the in-coverage flag is set to False.

An SLSS ID of a node at Priority 1 or Priority 2 is set in the same way as an SLSS ID in GNSS or GNSS-equivalent synchronization according to the fourth embodiment, and the value of the in-coverage flag is set to True.

For a node at Priority 3, the value of the in-coverage flag is set to True, and the synchronization sequence of the node at Priority 3 is determined as follows: when the synchronization reference UE is a node at Priority 1a, the SLSS ID of the node at Priority 3 equals to the ID of a synchronization sequence of the synchronization reference node at Priority 1a plus 168; or, when the synchronization reference UE is a node at Priority 2, the synchronization sequence having the value of X2+168 is selected as the synchronization sequence of the node at Priority 3; or, when the synchronization reference UE is a node at Priority 3, and an SLSS thereof belongs to the id_oon set, the synchronization sequence of the node at Priority 3 is the same as the received SLSS ID of the UE at Priority 3; or, when the node operates as an independent synchronization source, a uniformly distributed value in the range of id_oon is selected randomly in the range [168, 335] as the synchronization sequence of the independent synchronization source.

### Sixth Embodiment

Fig. 8 illustrates an implementation of the sixth embodiment. Nodes in eNB based synchronization has four priorities, where the value of the in-coverage flag of a node at Priority 1, 2, or 3 is set in the same way as the value of the in-coverage flag of a node at Priority 1, 2, or 3 in GNSS or GNSS-equivalent synchronization is set according to the fourth embodiment.

An SLSS ID of a node at Priority 1a is selected from id_net excluding X1 and X2 and is configured by an eNB via system information, and the value of the in-coverage flag is set to False.

An SLSS ID of a node at Priority 1 or Priority 2 is set in the same way as an SLSS ID in GNSS or GNSS-equivalent synchronization according to the fourth embodiment, and the value of the in-coverage flag is set to True.

For a node at Priority 3, the value of the in-coverage flag is set to True, and the synchronization sequence of the node at Priority 3 is determined as follows: when the synchronization reference UE is a node at Priority 1a, the synchronization sequence of the node at Priority 3 is selected from id_net, and the synchronization sequence of the node at Priority 3 is the same sequence as the synchronization sequence of the synchronization reference node at Priority 1a; or, when the synchronization reference UE is a node at Priority 2, the synchronization sequence having the value of X2+168 is selected as the synchronization sequence of the node at Priority 3; or, when the synchronization reference UE is a node at Priority 3, and an SLSS of the synchronization reference UE belongs to the id_net set, the synchronization sequence of the node at Priority 3 is selected from the id_oon set, and the value of the synchronization sequence of the node at Priority 3 equals to the ID of the synchronization sequence of the synchronization reference UE at Priority 3 plus 168; or, when the node operates as an independent synchronization source, a uniformly distributed value in the range of id_oon is selected randomly in the range [168, 335] as the synchronization sequence of the independent synchronization source.

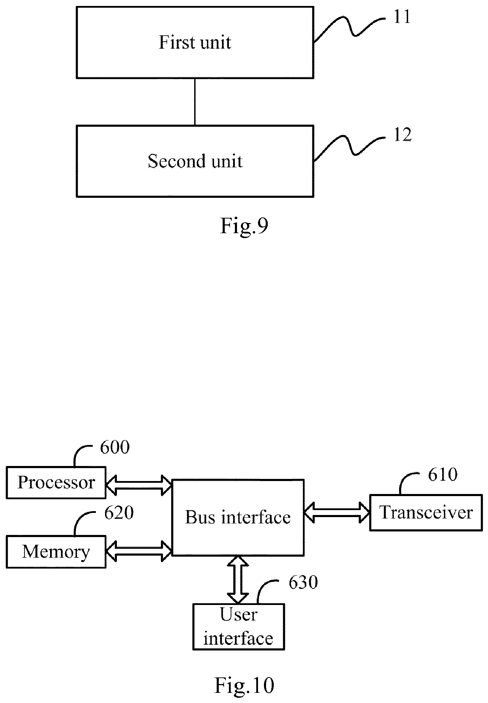

In correspondence to the method above, Fig. 9 illustrates a synchronization device according to an embodiment of the disclosure. The synchronization device includes: a first unit 11 configured to determine a synchronization priority of the node; and a second unit 12 configured to determine a synchronization sequence of the node and a value of a distinguishing flag of the node according to the synchronization priority of the node. The distinguishing flag indicates that the node belongs to a GNSS synchronization scheme or an eNB synchronization scheme.

In an embodiment, the first unit is configured to determine that the synchronization priority of the node is a preset first priority, a preset second priority, a preset third priority, or a preset fourth priority. In an embodiment, the second unit is configured to: when the synchronization priority of the node is the first priority, determine that the synchronization sequence of the node is a synchronization sequence in an id_net set excluding (X1-168) and (X2-168), and determine that the value of the distinguishing flag of the node is True; when the synchronization priority of the node is the second priority, determine that the synchronization sequence of the node is a synchronization sequence X1 in an id_oon set, and determine that the value of the distinguishing flag of the node is False;when the synchronization priority of the node is the third priority, determine that the synchronization sequence of the node is a synchronization sequence X2 in the id_oon set, and determine that the value of the distinguishing flag of the node is False; and when the synchronization priority of the node is the fourth priority, determine that the value of the distinguishing flag of the node is False, and determine the synchronization sequence of the node according to one of following schemes: in a first scheme, if a synchronization reference node of the node has the first priority, then the synchronization sequence of the node is the same sequence as a synchronization sequence of the synchronization reference node, or the synchronization sequence of the node equals to the synchronization sequence of the synchronization reference node plus 168; in a second scheme, if the synchronization reference node of the node has the third priority, then the synchronization sequence of the node is set to be a fixed value X3; in a third scheme, if the synchronization reference node of the node has the fourth priority, then, if the synchronization sequence of the synchronization reference node belongs to the id_net set, then the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node, where the value is not equal to X1 or X2.

In an embodiment, the second unit is configured to: when the synchronization priority of the node is the first priority, determine that the synchronization sequence of the node is a synchronization sequence in an id_net set excluding X1 and X2, and determine that the value of the distinguishing flag of the node is False; when the synchronization priority of the node is the second priority, determine that the synchronization sequence of the node is the synchronization sequence X1 in the id_net set, and determine that the value of the distinguishing flag of the node is True; when the synchronization priority of the node is the third priority, determine that the synchronization sequence of the node is the synchronization sequence X2 in the id_net, and determine that the value of the distinguishing flag of the node is True; and when the synchronization priority of the node is the fourth priority, determine that the value of the distinguishing flag of the node is True, and determine the synchronization sequence of the node according to one of following schemes: in a first scheme, if a synchronization reference node of the node has the first priority, then the synchronization sequence of the node is a synchronization sequence in the id_net set, and the synchronization sequence of the node is the same as a synchronization sequence of the synchronization reference node, or the synchronization sequence of the node is a synchronization sequence in an id_oon set, and the synchronization sequence of the node equals to the synchronization sequence of the synchronization reference node plus 168; in a second scheme, if the synchronization reference node of the node has the third priority, then the synchronization sequence of the node is a synchronization sequence in the id_oon set, and the synchronization sequence of the node equals to a fixed value of (X2+168); in a third scheme, if the synchronization reference node of the node has the fourth priority, then, if the synchronization sequence of the synchronization reference node belongs to the id_net set, then the synchronization sequence of the node is a synchronization sequence in the id_oon set, and the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node. In an embodiment, when the synchronization priority of the node is the first priority, the synchronization sequence of the node, determined by the second unit, is configured by the eNB via system information.

The embodiments illustrated in Fig. 10 are not part of the present invention and are present for illustrative purposes only.

Referring to Fig. 10, another synchronization device according to an embodiment of the disclosure includes: a processor 600 configured to read and execute program in a memory 620 to perform: determining a synchronization priority of a node; and determining a synchronization sequence of the node and a value of a distinguishing flag of the node according to the synchronization priority of the node. The distinguishing flag indicates that the node belongs to a GNSS synchronization scheme or an eNB synchronization scheme.

In an embodiment, the processor 600 is configured to determine the synchronization priority of the node includes: determining that the synchronization priority of the node is a preset first priority, a preset second priority, a preset third priority, or a preset fourth priority. In an embodiment, the processor 600 is configured to determine the synchronization sequence of the node and the value of the distinguishing flag of the node according to the synchronization priority of the node includes: when the synchronization priority of the node is the first priority, determining that the synchronization sequence of the node is a synchronization sequence in an id_net set excluding (X1-168) and (X2-168), and determining that the value of the distinguishing flag of the node is True; when the synchronization priority of the node is the second priority, determining that the synchronization sequence of the node is a synchronization sequence X1 in an id_oon set, and determining that the value of the distinguishing flag of the node is False; when the synchronization priority of the node is the third priority, determining that the synchronization sequence of the node is a synchronization sequence X2 in the id_oon set, and determining that the value of the distinguishing flag of the node is False; and when the synchronization priority of the node is the fourth priority, determining that the value of the distinguishing flag of the node is False, and determining the synchronization sequence of the node according to one of following schemes: in a first scheme, if a synchronization reference node of the node has the first priority, then the synchronization sequence of the node is the same sequence as a synchronization sequence of the synchronization reference node, or the synchronization sequence of the node equals to the synchronization sequence of the synchronization reference node plus 168; in a second scheme, if the synchronization reference node of the node has the third priority, then the synchronization sequence of the node is set to be a fixed value X3; in a third scheme, if the synchronization reference node of the node has the fourth priority, then, if the synchronization sequence of the synchronization reference node belongs to the id_net set, then the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node, where the value is not equal to X1 or X2.

In an embodiment, the processor 600 configured to determine the synchronization sequence of the node and the value of the distinguishing flag of the node according to the synchronization priority of the node includes: when the synchronization priority of the node is the first priority, determining that the synchronization sequence of the node is a synchronization sequence in an id_net set excluding X1 and X2, and determining that the value of the distinguishing flag of the node is False; when the synchronization priority of the node is the second priority, determining that the synchronization sequence of the node is the synchronization sequence X1 in the id_net set, and determining that the value of the distinguishing flag of the node is True; when the synchronization priority of the node is the third priority, determining that the synchronization sequence of the node is the synchronization sequence X2 in the id_net, and determining that the value of the distinguishing flag of the node is True; and when the synchronization priority of the node is the fourth priority, determining that the value of the distinguishing flag of the node is True, and determining the synchronization sequence of the node according to one of following schemes: in a first scheme, if a synchronization reference node of the node has the first priority, then the synchronization sequence of the node is a synchronization sequence in the id_net set, and the synchronization sequence of the node is the same as a synchronization sequence of the synchronization reference node, or the synchronization sequence of the node is a synchronization sequence in an id_oon set, and the synchronization sequence of the node equals to the synchronization sequence of the synchronization reference node plus 168; in a second scheme, if the synchronization reference node of the node has the third priority, then the synchronization sequence of the node is a synchronization sequence in the id_oon set, and the synchronization sequence of the node equals to a fixed value of (X2+168); in a third scheme, if the synchronization reference node of the node has the fourth priority, then, if the synchronization sequence of the synchronization reference node belongs to the id_net set, then the synchronization sequence of the node is a synchronization sequence in the id_oon set, and the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and in a fourth scheme, if the node operates as an independent synchronization source, then a value not smaller than 168 and not greater than 335 is randomly selected as the synchronization sequence of the node. In an embodiment, when the synchronization priority of the node is the first priority, the processor 600 is configured to determine that the synchronization sequence of the node is configured by an eNB via system information. The synchronization device also includes a transceiver 60 configured to receive and transmit data under the control of the processor 600.

Here in Fig. 10, the bus architecture can include any number of interconnecting buses and bridges to particularly link together various circuits including one or more processors represented by the processor 600, and one or more memories represented by the memory 620. The bus architecture can further link together various other circuits, e.g., a peripheral device, a manostat, a power management circuit, etc., all of which are well known in the art, so a further description thereof will be omitted in this context. The bus interface serves as an interface. The transceiver 610 can be a number of elements, e.g., a transmitter and a receiver, which are units for communication with various other devices over a transmission medium. For different user equipments, the user interface 630 can also be an interface via which device(s) is connected externally and/or internally,, where the connected device(s) includes but is not be limited to a keypad, a display, a loudspeaker, a microphone, a joystick, etc. The processor 600 is responsible for managing the bus architecture and performing normal processes, and the memory 620 can store data for use by the processor 600 in performing operations. The processor 600 can be a Central Processing Unit (CPU), an Application Specific Integrated Circuit (ASIC), a Field-Programmable Gate Array (FPGA), or a Complex Programmable Logic Device (CPLD).

In summary, the embodiments of the disclosure provide a synchronization method and device so as to distinguish between synchronization schemes and synchronization levels of nodes in a V2V system, where this method is compatible with both a synchronization scheme whose timing refers from a GNSS or a synchronization scheme whose timing refers from an eNB, and brings minor modification to the existing standards, so that a terminal can distinguish between the different synchronization levels to enable rapid synchronization in the V2V communication system.

Those skilled in the art shall appreciate that the embodiments of the disclosure can be embodied as a method, a system or a computer program product. Therefore the disclosure can be embodied in the form of an all-hardware embodiment, an all-software embodiment or an embodiment of software and hardware in combination. Furthermore the disclosure can be embodied in the form of a computer program product embodied in one or more computer useable storage mediums (including but not limited to a disk memory, an optical memory, etc.) in which computer useable program codes are contained. The disclosure has been described in a flow chart and/or a block diagram of the method, the device (system) and the computer program product according to the embodiments of the disclosure. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram. These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram. These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram. Evidently those skilled in the art can make various modifications and variations to the disclosure without departing from the scope of the disclosure. Thus the disclosure is also intended to encompass these modifications and variations thereto so long as the modifications and variations come into the scope of the claims appended to the disclosure.

## Claims

1. A synchronization method performed by a node of a Vehicle-to-Vehicle, V2V, communication system,
wherein the V2V communication system comprises a Global Navigation Satellite System, GNSS, synchronization scheme and an evolved Node B, eNB, synchronization scheme, **characterized in that**, the method comprises:
determining (101) a synchronization priority of the node according to a synchronization signal received by the node; and
determining (102) a synchronization sequence of the node and a value of a distinguishing flag of the node for a synchronization signal to be sent by the node according to the synchronization priority of the node, wherein the distinguishing flag is configured for indicating that the node belongs to the GNSS synchronization scheme or the eNB synchronization scheme;
wherein the determining (101) the synchronization priority of the node according to the synchronization signal comprises:
determining that the synchronization priority of the node is a preset first priority, a preset second priority, a preset third priority, or a preset fourth priority according to the synchronization signal;
determining (102) the synchronization sequence of the node and the value of the distinguishing flag of the node according to the synchronization priority of the node comprises:
when the synchronization priority of the node is the preset first priority, determining that the synchronization sequence of the node is a synchronization sequence in an id_net set excluding, X1-168, and, X2-168, and determining that the value of the distinguishing flag of the node is True;
when the synchronization priority of the node is the preset second priority, determining that the synchronization sequence of the node is a synchronization sequence X1 in an id_oon set, and determining that the value of the distinguishing flag of the node is False;
when the synchronization priority of the node is the preset third priority, determining that the synchronization sequence of the node is a synchronization sequence X2 in the id_oon set, and determining that the value of the distinguishing flag of the node is False; and
when the synchronization priority of the node is the preset fourth priority, determining that the value of the distinguishing flag of the node is False, and determining the synchronization sequence of the node according to one of following schemes:
in a first scheme, if a synchronization reference node of the node has the preset first priority, then the synchronization sequence of the node is the same sequence as a synchronization sequence of the synchronization reference node, or the synchronization sequence of the node equals to the synchronization sequence of the synchronization reference node plus 168;
in a second scheme, if the synchronization reference node of the node has the preset third priority, then the synchronization sequence of the node is set to be a fixed value X3;
in a third scheme, if the synchronization reference node of the node has the preset fourth priority, then:
if the synchronization sequence of the synchronization reference node belongs to the id_net set, then the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and
in a fourth scheme, if the node operates as an independent synchronization source, then a value not smaller than 168 and not greater than 335 is randomly selected as the synchronization sequence of the node, wherein the value is not equal to X1 or X2;
or
determining (102) the synchronization sequence of the node and the value of the distinguishing flag of the node according to the synchronization priority of the node comprises:
when the synchronization priority of the node is the preset first priority, determining that the synchronization sequence of the node is a synchronization sequence in an id_net set excluding X1 and X2, and determining that the value of the distinguishing flag of the node is False;
when the synchronization priority of the node is the preset second priority, determining that the synchronization sequence of the node is the synchronization sequence X1 in the id_net set, and determining that the value of the distinguishing flag of the node is True;
when the synchronization priority of the node is the preset third priority, determining that the synchronization sequence of the node is the synchronization sequence X2 in the id_net set, and determining that the value of the distinguishing flag of the node is True; and
when the synchronization priority of the node is the preset fourth priority, determining that the value of the distinguishing flag of the node is True, and determining the synchronization sequence of the node according to one of following schemes:
in a first scheme, if a synchronization reference node of the node has the preset first priority, then the synchronization sequence of the node is a synchronization sequence in the id_net set, and the synchronization sequence of the node is the same as a synchronization sequence of the synchronization reference node, or the synchronization sequence of the node is a synchronization sequence in an id_oon set, and the synchronization sequence of the node equals to the synchronization sequence of the synchronization reference node plus 168;
in a second scheme, if the synchronization reference node of the node has the preset third priority, then the synchronization sequence of the node is a synchronization sequence in the id_oon set, and the synchronization sequence of the node equals to a fixed value of, X2+168;
in a third scheme, if the synchronization reference node of the node has the preset fourth priority, then:
if the synchronization sequence of the synchronization reference node belongs to the id_net set, then the synchronization sequence of the node is a synchronization sequence in the id_oon set, and the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and
in a fourth scheme, if the node operates as an independent synchronization source, then a value not smaller than 168 and not greater than 335 is randomly selected as the synchronization sequence of the node;
wherein X1 and X2 are positive integers greater than or equal to 1, the id_net set is a set of synchronization sequences within network coverage, and the id_oon set is a set of synchronization sequences outside the network coverage.

2. The method according to claim 1, wherein when the synchronization priority of the node is the preset first priority, the synchronization sequence of the node is configured by the eNB via system information.

3. A synchronization device, being a node of a Vehicle-to-Vehicle, V2V, communication system,
wherein the V2V communication system comprises a Global Navigation Satellite System, GNSS, synchronization scheme and an evolved Node B, eNB, synchronization scheme, **characterized in that**, the device comprises:
a first unit (11) configured to determine a synchronization priority of the node according to a synchronization signal received by the node; and
a second unit (12) configured to determine a synchronization sequence of the node and a value of a distinguishing flag of the node for a synchronization signal to be sent by the node according to the synchronization priority of the node, wherein the distinguishing flag is configured for indicating that the node belongs to the GNSS synchronization scheme or the eNB synchronization scheme;
wherein the first unit (11) is configured to:
determine that the synchronization priority of the node is a preset first priority, a preset second priority, a preset third priority, or a preset fourth priority according to the synchronization signal;
the second unit (12) is configured to:
when the synchronization priority of the node is the preset first priority, determine that the synchronization sequence of the node is a synchronization sequence in an id_net set excluding, X1-168, and, X2-168, and determine that the value of the distinguishing flag of the node is True;
when the synchronization priority of the node is the preset second priority, determine that the synchronization sequence of the node is a synchronization sequence X1 in an id_oon set, and determine that the value of the distinguishing flag of the node is False;
when the synchronization priority of the node is the preset third priority, determine that the synchronization sequence of the node is a synchronization sequence X2 in the id_oon set, and determine that the value of the distinguishing flag of the node is False; and
when the synchronization priority of the node is the preset fourth priority, determine that the value of the distinguishing flag of the node is False, and determine the synchronization sequence of the node according to one of following schemes:
in a first scheme, if a synchronization reference node of the node has the preset first priority, then the synchronization sequence of the node is the same sequence as a synchronization sequence of the synchronization reference node, or the synchronization sequence of the node equals to the synchronization sequence of the synchronization reference node plus 168;
in a second scheme, if the synchronization reference node of the node has the preset third priority, then the synchronization sequence of the node is set to be a fixed value X3;
in a third scheme, if the synchronization reference node of the node has the preset fourth priority, then:
if the synchronization sequence of the synchronization reference node belongs to the id_net set, then the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and
in a fourth scheme, if the node operates as an independent synchronization source, then a value not smaller than 168 and not greater than 335 is randomly selected as the synchronization sequence of the node, wherein the value is not equal to X1 or X2;
or
the second unit (12) is configured to:
when the synchronization priority of the node is the preset first priority, determine that the synchronization sequence of the node is a synchronization sequence in an id_net set excluding X1 and X2, and determine that the value of the distinguishing flag of the node is False;
when the synchronization priority of the node is the preset second priority, determine that the synchronization sequence of the node is the synchronization sequence X1 in the id_net set, and determine that the value of the distinguishing flag of the node is True;
when the synchronization priority of the node is the preset third priority, determine that the synchronization sequence of the node is the synchronization sequence X2 in the id_net set, and determine that the value of the distinguishing flag of the node is True; and
when the synchronization priority of the node is the preset fourth priority, determine that the value of the distinguishing flag of the node is True, and determine the synchronization sequence of the node according to one of following schemes:
in a first scheme, if a synchronization reference node of the node has the preset first priority, then the synchronization sequence of the node is a synchronization sequence in the id_net set, and the synchronization sequence of the node is the same as a synchronization sequence of the synchronization reference node, or the synchronization sequence of the node is a synchronization sequence in an id_oon set, and the synchronization sequence of the node equals to the synchronization sequence of the synchronization reference node plus 168;
in a second scheme, if the synchronization reference node of the node has the preset third priority, then the synchronization sequence of the node is a synchronization sequence in the id_oon set, and the synchronization sequence of the node equals to a fixed value of, X2+168;
in a third scheme, if the synchronization reference node of the node has the preset fourth priority, then:
if the synchronization sequence of the synchronization reference node belongs to the id_net set, then the synchronization sequence of the node is a synchronization sequence in the id_oon set, and the synchronization sequence of the node equals to the synchronization sequence of the synchronization reference node plus 168; or if the synchronization sequence of the synchronization reference node belongs to the id_oon set, then the synchronization sequence of the node is the same as the synchronization sequence of the synchronization reference node; and
in a fourth scheme, if the node operates as an independent synchronization source, then a value not smaller than 168 and not greater than 335 is randomly selected as the synchronization sequence of the node;
wherein X1 and X2 are positive integers greater than or equal to 1, the id_net set is a set of synchronization sequences within network coverage, and the id_oon set is a set of synchronization sequences outside the network coverage.

4. The device according to claim 3, wherein when the synchronization priority of the node is the preset first priority, the synchronization sequence of the node, determined by the second unit (12), is configured by the eNB via system information.

## Patentansprüche

1. Synchronisationsverfahren, das von einem Knoten eines Fahrzeug-zu-Fahrzeug-Kommunikationssystems, V2V-Kommunikationssystems, durchgeführt wird,
wobei das V2V-Kommunikationssystem ein Synchronisationsschema für ein globales Navigationssatellitensystem, GNSS, und ein Synchronisationsschema für einen evolved Node B, eNB, umfasst, **dadurch gekennzeichnet, dass** das Verfahren Folgendes umfasst:
Bestimmen (101) einer Synchronisationspriorität des Knotens gemäß einem Synchronisationssignal, das durch den Knoten empfangen wird; und
Bestimmen (102) einer Synchronisationssequenz des Knotens und eines Werts eines Unterscheidungsflags des Knotens für ein Synchronisationssignal, das von dem Knoten gemäß der Synchronisationspriorität des Knotens gesendet werden soll, wobei das Unterscheidungsflag dazu konfiguriert ist, anzugeben, dass der Knoten zu dem GNSS-Synchronisationsschema oder dem eNB-Synchronisationsschema gehört;
wobei das Bestimmen (101) der Synchronisationspriorität des Knotens gemäß dem Synchronisationssignal Folgendes umfasst:
Bestimmen, dass die Synchronisationspriorität des Knotens eine voreingestellte erste Priorität, eine voreingestellte zweite Priorität, eine voreingestellte dritte Priorität oder eine voreingestellte vierte Priorität ist, gemäß dem Synchronisationssignal;
wobei das Bestimmen (102) der Synchronisationssequenz des Knotens und des Werts des Unterscheidungsflags des Knotens gemäß der Synchronisationspriorität des Knotens Folgendes umfasst:
wenn die Synchronisationspriorität des Knotens die voreingestellte erste Priorität ist, Bestimmen, dass die Synchronisationssequenz des Knotens eine Synchronisationssequenz in einem id_net-Satz ist, der X1-168 und X2-168 ausschließt, und Bestimmen, dass der Wert des Unterscheidungsflags des Knotens True ist;
wenn die Synchronisationspriorität des Knotens die voreingestellte zweite Priorität ist, Bestimmen, dass die Synchronisationssequenz des Knotens eine Synchronisationssequenz X1 in einem id_oon-Satz ist, und Bestimmen, dass der Wert des Unterscheidungsflags des Knotens False ist;
wenn die Synchronisationspriorität des Knotens die voreingestellte dritte Priorität ist, Bestimmen, dass die Synchronisationssequenz des Knotens eine Synchronisationssequenz X2 in dem id_oon-Satz ist, und Bestimmen, dass der Wert des Unterscheidungsflags des Knotens False ist; und,
wenn die Synchronisationspriorität des Knotens die voreingestellte vierte Priorität ist, Bestimmen, dass der Wert des Unterscheidungsflags des Knotens False ist, und Bestimmen der Synchronisationssequenz des Knotens gemäß einem der folgenden Schemata:
falls in einem ersten Schema ein Synchronisationsreferenzknoten des Knotens die voreingestellte erste Priorität aufweist, dann ist die Synchronisationssequenz des Knotens die gleiche Sequenz wie eine Synchronisationssequenz des Synchronisationsreferenzknotens oder die Synchronisationssequenz des Knotens ist gleich der Synchronisationssequenz des Synchronisationsreferenzknotens plus 168;
falls in einem zweiten Schema der Synchronisationsreferenzknoten des Knotens die voreingestellte dritte Priorität aufweist, dann wird die Synchronisationssequenz des Knotens auf einen festen Wert X3 gesetzt;
falls in einem dritten Schema der Synchronisationsreferenzknoten des Knotens die voreingestellte vierte Priorität aufweist, dann gilt Folgendes:
falls die Synchronisationssequenz des Synchronisationsreferenzknotens zu dem id_net-Satz gehört, dann ist die Synchronisationssequenz des Knotens gleich der Synchronisationssequenz des Synchronisationsreferenzknotens plus 168; oder falls die Synchronisationssequenz des Synchronisationsreferenzknotens zu dem id_oon-Satz gehört, dann ist die Synchronisationssequenz des Knotens gleich wie die Synchronisationssequenz des Synchronisationsreferenzknotens; und
falls in einem vierten Schema der Knoten als eine unabhängige Synchronisationsquelle fungiert, dann wird ein Wert, der nicht kleiner als 168 und nicht größer als 335 ist, zufällig als die Synchronisationssequenz des Knotens ausgewählt, wobei der Wert nicht gleich X1 oder X2 ist;
oder
wobei das Bestimmen (102) der Synchronisationssequenz des Knotens und des Werts des Unterscheidungsflags des Knotens gemäß der Synchronisationspriorität des Knotens Folgendes umfasst:
wenn die Synchronisationspriorität des Knotens die voreingestellte erste Priorität ist, Bestimmen, dass die Synchronisationssequenz des Knotens eine Synchronisationssequenz in einem id_net-Satz ist, der X1 und X2 ausschließt, und Bestimmen, dass der Wert des Unterscheidungsflags des Knotens False ist;
wenn die Synchronisationspriorität des Knotens die voreingestellte zweite Priorität ist, Bestimmen, dass die Synchronisationssequenz des Knotens die Synchronisationssequenz X1 in dem id_net-Satz ist, und Bestimmen, dass der Wert des Unterscheidungsflags des Knotens True ist;
wenn die Synchronisationspriorität des Knotens die voreingestellte dritte Priorität ist, Bestimmen, dass die Synchronisationssequenz des Knotens die Synchronisationssequenz X2 in dem id_net-Satz ist, und Bestimmen, dass der Wert des Unterscheidungsflags des Knotens True ist; und
wenn die Synchronisationspriorität des Knotens die voreingestellte vierte Priorität ist, Bestimmen, dass der Wert des Unterscheidungsflags des Knotens True ist, und Bestimmen der Synchronisationssequenz des Knotens gemäß einem der folgenden Schemata:
falls in einem ersten Schema ein Synchronisationsreferenzknoten des Knotens die voreingestellte erste Priorität aufweist, dann ist die Synchronisationssequenz des Knotens eine Synchronisationssequenz in dem id_net-Satz und die Synchronisationssequenz des Knotens ist gleich wie eine Synchronisationssequenz des Synchronisationsreferenzknotens oder die Synchronisationssequenz des Knotens ist eine Synchronisationssequenz in einem id_oon-Satz und die Synchronisationssequenz des Knotens ist gleich der Synchronisationssequenz des Synchronisationsreferenzknotens plus 168;
falls in einem zweiten Schema der Synchronisationsreferenzknoten des Knotens die voreingestellte dritte Priorität aufweist, dann ist die Synchronisationssequenz des Knotens eine Synchronisationssequenz in dem id_oon-Satz und die Synchronisationssequenz des Knotens ist gleich einem festen Wert von X2 + 168;
falls in einem dritten Schema der Synchronisationsreferenzknoten des Knotens die voreingestellte vierte Priorität aufweist, dann gilt Folgendes:
falls die Synchronisationssequenz des Synchronisationsreferenzknotens zu dem id_net-Satz gehört, dann ist die Synchronisationssequenz des Knotens eine Synchronisationssequenz in dem id_oon-Satz und die Synchronisationssequenz des Knotens ist gleich der Synchronisationssequenz des Synchronisationsreferenzknotens plus 168; oder falls die Synchronisationssequenz des Synchronisationsreferenzknotens zu dem id_oon-Satz gehört, dann ist die Synchronisationssequenz des Knotens gleich wie die Synchronisationssequenz des Synchronisationsreferenzknotens; und
falls in einem vierten Schema der Knoten als eine unabhängige Synchronisationsquelle fungiert, dann wird ein Wert, der nicht kleiner als 168 und nicht größer als 335 ist, zufällig als die Synchronisationssequenz des Knotens ausgewählt;
wobei X1 und X2 positive ganze Zahlen größer als oder gleich 1 sind, der id_net-Satz ein Satz von Synchronisationssequenzen innerhalb der Netzwerkabdeckung ist und der id_oon-Satz ein Satz von Synchronisationssequenzen außerhalb der Netzwerkabdeckung ist.

2. Verfahren nach Anspruch 1, wobei, wenn die Synchronisationspriorität des Knotens die voreingestellte erste Priorität ist, die Synchronisationssequenz des Knotens von dem eNB über Systeminformationen konfiguriert wird.

3. Synchronisationsvorrichtung, wobei es sich um einen Knoten eines Vehicle-to-Vehicle-Kommunikationssystems, V2V-Kommunikationssystems, handelt, wobei das V2V-Kommunikationssystem ein Synchronisationsschema für ein globales Navigationssatellitensystem, GNSS, und ein Synchronisationsschema für einen evolved Node B, eNB, umfasst, **dadurch gekennzeichnet, dass** die Vorrichtung Folgendes umfasst:
eine erste Einheit (11), die dazu konfiguriert ist, eine Synchronisationspriorität des Knotens gemäß einem durch den Knoten empfangenen Synchronisationssignal zu bestimmen; und
eine zweite Einheit (12), die dazu konfiguriert ist, eine Synchronisationssequenz des Knotens und einen Wert eines Unterscheidungsflags des Knotens für ein Synchronisationssignal, das von dem Knoten gesendet werden soll, gemäß der Synchronisationspriorität des Knotens zu bestimmen, wobei das Unterscheidungsflag dazu konfiguriert ist, anzugeben, dass der Knoten zu dem GNSS-Synchronisationsschema oder dem eNB-Synchronisationsschema gehört;
wobei die erste Einheit (11) zu Folgendem konfiguriert ist:
Bestimmen, dass die Synchronisationspriorität des Knotens eine voreingestellte erste Priorität, eine voreingestellte zweite Priorität, eine voreingestellte dritte Priorität oder eine voreingestellte vierte Priorität gemäß dem Synchronisationssignal ist;
die zweite Einheit (12) zu Folgendem konfiguriert ist:
wenn die Synchronisationspriorität des Knotens die voreingestellte erste Priorität ist, Bestimmen, dass die Synchronisationssequenz des Knotens eine Synchronisationssequenz in einem id_net-Satz ist, der X1-168 und X2-168 ausschließt, und Bestimmen, dass der Wert des Unterscheidungsflags des Knotens True ist;
wenn die Synchronisationspriorität des Knotens die voreingestellte zweite Priorität ist, Bestimmen, dass die Synchronisationssequenz des Knotens eine Synchronisationssequenz X1 in einem id_oon-Satz ist, und Bestimmen, dass der Wert des Unterscheidungsflags des Knotens False ist;
wenn die Synchronisationspriorität des Knotens die voreingestellte dritte Priorität ist, Bestimmen, dass die Synchronisationssequenz des Knotens eine Synchronisationssequenz X2 in dem id_oon-Satz ist, und Bestimmen, dass der Wert des Unterscheidungsflags des Knotens False ist; und,
wenn die Synchronisationspriorität des Knotens die voreingestellte vierte Priorität ist, Bestimmen, dass der Wert des Unterscheidungsflags des Knotens False ist, und Bestimmen der Synchronisationssequenz des Knotens gemäß einem der folgenden Schemata:
falls in einem ersten Schema ein Synchronisationsreferenzknoten des Knotens die voreingestellte erste Priorität aufweist, dann ist die Synchronisationssequenz des Knotens die gleiche Sequenz wie eine Synchronisationssequenz des Synchronisationsreferenzknotens oder die Synchronisationssequenz des Knotens ist gleich der Synchronisationssequenz des Synchronisationsreferenzknotens plus 168;
falls in einem zweiten Schema der Synchronisationsreferenzknoten des Knotens die voreingestellte dritte Priorität aufweist, dann wird die Synchronisationssequenz des Knotens auf einen festen Wert X3 gesetzt;
falls in einem dritten Schema der Synchronisationsreferenzknoten des Knotens die voreingestellte vierte Priorität aufweist, dann gilt Folgendes:
falls die Synchronisationssequenz des Synchronisationsreferenzknotens zu dem id_net-Satz gehört, dann ist die Synchronisationssequenz des Knotens gleich der Synchronisationssequenz des Synchronisationsreferenzknotens plus 168; oder falls die Synchronisationssequenz des Synchronisationsreferenzknotens zu dem id_oon-Satz gehört, dann ist die Synchronisationssequenz des Knotens gleich wie die Synchronisationssequenz des Synchronisationsreferenzknotens; und
falls in einem vierten Schema der Knoten als eine unabhängige Synchronisationsquelle fungiert, dann wird ein Wert, der nicht kleiner als 168 und nicht größer als 335 ist, zufällig als die Synchronisationssequenz des Knotens ausgewählt, wobei der Wert nicht gleich X1 oder X2 ist;
oder
die zweite Einheit (12) zu Folgendem konfiguriert ist:
wenn die Synchronisationspriorität des Knotens die voreingestellte erste Priorität ist, Bestimmen, dass die Synchronisationssequenz des Knotens eine Synchronisationssequenz in einem id_net-Satz ist, der X1 und X2 ausschließt, und Bestimmen, dass der Wert des Unterscheidungsflags des Knotens False ist;
wenn die Synchronisationspriorität des Knotens die voreingestellte zweite Priorität ist, Bestimmen, dass die Synchronisationssequenz des Knotens die Synchronisationssequenz X1 in dem id_net-Satz ist, und Bestimmen, dass der Wert des Unterscheidungsflags des Knotens True ist;
wenn die Synchronisationspriorität des Knotens die voreingestellte dritte Priorität ist, Bestimmen, dass die Synchronisationssequenz des Knotens die Synchronisationssequenz X2 in dem id_net-Satz ist, und Bestimmen, dass der Wert des Unterscheidungsflags des Knotens True ist; und
wenn die Synchronisationspriorität des Knotens die voreingestellte vierte Priorität ist, Bestimmen, dass der Wert des Unterscheidungsflags des Knotens True ist, und Bestimmen der Synchronisationssequenz des Knotens gemäß einem der folgenden Schemata:
falls in einem ersten Schema ein Synchronisationsreferenzknoten des Knotens die voreingestellte erste Priorität aufweist, dann ist die Synchronisationssequenz des Knotens eine Synchronisationssequenz in dem id_net-Satz und die Synchronisationssequenz des Knotens ist gleich wie eine Synchronisationssequenz des Synchronisationsreferenzknotens oder die Synchronisationssequenz des Knotens ist eine Synchronisationssequenz in einem id_oon-Satz und die Synchronisationssequenz des Knotens ist gleich der Synchronisationssequenz des Synchronisationsreferenzknotens plus 168;
falls in einem zweiten Schema der Synchronisationsreferenzknoten des Knotens die voreingestellte dritte Priorität aufweist, dann ist die Synchronisationssequenz des Knotens eine Synchronisationssequenz in dem id_oon-Satz und die Synchronisationssequenz des Knotens ist gleich einem festen Wert von X2 + 168;
falls in einem dritten Schema der Synchronisationsreferenzknoten des Knotens die voreingestellte vierte Priorität aufweist, dann gilt Folgendes:
falls die Synchronisationssequenz des Synchronisationsreferenzknotens zu dem id_net-Satz gehört, dann ist die Synchronisationssequenz des Knotens eine Synchronisationssequenz in dem id_oon-Satz und die Synchronisationssequenz des Knotens ist gleich der Synchronisationssequenz des Synchronisationsreferenzknotens plus 168; oder falls die Synchronisationssequenz des Synchronisationsreferenzknotens zu dem id_oon-Satz gehört, dann ist die Synchronisationssequenz des Knotens gleich wie die Synchronisationssequenz des Synchronisationsreferenzknotens; und
falls in einem vierten Schema der Knoten als eine unabhängige Synchronisationsquelle fungiert, dann wird ein Wert, der nicht kleiner als 168 und nicht größer als 335 ist, zufällig als die Synchronisationssequenz des Knotens ausgewählt;
wobei X1 und X2 positive ganze Zahlen größer als oder gleich 1 sind, der id_net-Satz ein Satz von Synchronisationssequenzen innerhalb der Netzwerkabdeckung ist und der id_oon-Satz ein Satz von Synchronisationssequenzen außerhalb der Netzwerkabdeckung ist.

4. Vorrichtung nach Anspruch 3, wobei, wenn die Synchronisationspriorität des Knotens die voreingestellte erste Priorität ist, die von der zweiten Einheit (12) bestimmte Synchronisationssequenz des Knotens von dem eNB über Systeminformationen konfiguriert wird.

## Revendications

1. Procédé de synchronisation effectué par un nœud d'un système de communication de véhicule à véhicule, V2V, dans lequel le système de communication V2V comprend un un schéma de synchronisation par système de géolocalisation et navigation par satellites, GNSS, et un schéma de synchronisation par Node B évolué, eNB, **caractérisé en ce que** le procédé comprend :
la détermination (101) d'une priorité de synchronisation du nœud en fonction d'un signal de synchronisation reçu par le nœud ; et
la détermination (102) d'une séquence de synchronisation du nœud et d'une valeur d'un indicateur distinctif du nœud pour un signal de synchronisation à envoyer par le nœud en fonction de la priorité de synchronisation du nœud, dans lequel l'indicateur distinctif est configuré pour indiquer que le nœud appartient au schéma de synchronisation GNSS ou au schéma de synchronisation eNB ;
dans lequel la détermination (101) de la priorité de synchronisation du nœud en fonction du signal de synchronisation comprend :
la détermination du fait que la priorité de synchronisation du nœud est une première priorité prédéterminée, une deuxième priorité prédéterminée, une troisième priorité prédéterminée, ou une quatrième priorité prédéterminée en fonction du signal de synchronisation ;
la détermination (102) de la séquence de synchronisation du nœud et de la valeur de l'indicateur distinctif du nœud en fonction de la priorité de synchronisation du nœud comprend :
lorsque la priorité de synchronisation du nœud est la première priorité prédéterminée, la détermination du fait que la séquence de synchronisation du nœud est une séquence de synchronisation dans un ensemble id_net excluant X1-168 et X2-168, et la détermination du fait que la valeur de l'indicateur distinctif du nœud est Vrai ;
lorsque la priorité de synchronisation du nœud est la deuxième priorité prédéterminée, la détermination du fait que la séquence de synchronisation du nœud est une séquence de synchronisation X1 dans un ensemble id_oon, et la détermination du fait que la valeur de l'indicateur distinctif du nœud est Faux ;
lorsque la priorité de synchronisation du nœud est la troisième priorité prédéterminée, la détermination du fait que la séquence de synchronisation du nœud est une séquence de synchronisation X2 dans l'ensemble id_oon, et la détermination du fait que la valeur de l'indicateur de distinction du nœud est Faux ; et
lorsque la priorité de synchronisation du nœud est la quatrième priorité prédéterminée, la détermination du fait que la valeur de l'indicateur distinctif du nœud est Faux, et la détermination de la séquence de synchronisation du nœud selon l'un des schémas suivants :
selon un premier schéma, si un nœud de référence de synchronisation du nœud a la première priorité prédéterminée, alors la séquence de synchronisation du nœud est la même séquence qu'une séquence de synchronisation du nœud de référence de synchronisation, ou la séquence de synchronisation du nœud est égale à la séquence de synchronisation du nœud de référence de synchronisation plus 168 ;
selon un deuxième schéma, si le nœud de référence de synchronisation du nœud a la troisième priorité prédéterminée, alors la séquence de synchronisation du nœud est définie à une valeur fixe X3 ;
selon un troisième schéma, si le nœud de référence de synchronisation du nœud a la quatrième priorité prédéterminée, alors :
si la séquence de synchronisation du nœud de référence de synchronisation appartient à l'ensemble id_net, alors la séquence de synchronisation du nœud est égale à la séquence de synchronisation du nœud de référence de synchronisation plus 168 ; ou si la séquence de synchronisation du nœud de référence de synchronisation appartient à l'ensemble id_oon, alors la séquence de synchronisation du nœud de référence de synchronisation est la même que la séquence de synchronisation du nœud de référence de synchronisation ; et
selon un quatrième schéma, si le nœud fonctionne en tant que source de synchronisation indépendante, alors une valeur non inférieure à 168 et non supérieure à 335 est sélectionnée aléatoirement comme séquence de synchronisation du nœud, la valeur n'étant pas égale à X1 ni à X2 ;
ou
la détermination (102) de la séquence de synchronisation du nœud et de la valeur de l'indicateur distinctif du nœud en fonction de la priorité de synchronisation du nœud comprend :
lorsque la priorité de synchronisation du nœud est la première priorité prédéterminée, la détermination du fait que la séquence de synchronisation du nœud est une séquence de synchronisation dans un ensemble id_net excluant X1 et X2, et la détermination du fait que la valeur de l'indicateur distinctif du nœud est Faux ;
lorsque la priorité de synchronisation du nœud est la deuxième priorité prédéterminée, la détermination du fait que la séquence de synchronisation du nœud est la séquence de synchronisation X1 dans l'ensemble id_net, et la détermination du fait que la valeur de l'indicateur distinctif du nœud est Vrai ;
lorsque la priorité de synchronisation du nœud est la troisième priorité prédéterminée, la détermination du fait que la séquence de synchronisation du nœud est la séquence de synchronisation X2 dans l'ensemble id_net, et la détermination du fait que la valeur de l'indicateur distinctif du nœud est Vrai ; et
lorsque la priorité de synchronisation du nœud est la quatrième priorité prédéterminée, la détermination du fait que la valeur de l'indicateur distinctif du nœud est Vrai, et la détermination de la séquence de synchronisation du nœud selon l'un des schémas suivants :
selon un premier schéma, si un nœud de référence de synchronisation du nœud a la première priorité prédéterminée, alors la séquence de synchronisation du nœud est une séquence de synchronisation dans l'ensemble id_net, et la séquence de synchronisation du nœud est la même qu'une séquence de synchronisation du nœud de référence de synchronisation, ou la séquence de synchronisation du nœud est une séquence de synchronisation dans un ensemble id_oon, et la séquence de synchronisation du nœud est égale à la séquence de synchronisation du nœud de référence de synchronisation plus 168 ;
selon un deuxième schéma, si le nœud de référence de synchronisation du nœud a la troisième priorité prédéterminée, alors la séquence de synchronisation du nœud est une séquence de synchronisation de l'ensemble id_oon, et la séquence de synchronisation du nœud est égale à une valeur fixe de X2+168 ;
selon un troisième schéma, si le nœud de référence de synchronisation du nœud a la quatrième priorité prédéterminée, alors :
si la séquence de synchronisation du nœud de référence de synchronisation appartient à l'ensemble id_net, alors la séquence de synchronisation du nœud est une séquence de synchronisation dans l'ensemble id_oon, et la séquence de synchronisation du nœud est égale à la séquence de synchronisation du nœud de référence de synchronisation plus 168 ; ou si la séquence de synchronisation du nœud de référence de synchronisation appartient à l'ensemble id_oon, alors la séquence de synchronisation du nœud est la même que la séquence de synchronisation du nœud de référence de synchronisation ; et
selon un quatrième schéma, si le nœud fonctionne en tant que source de synchronisation indépendante, alors une valeur non inférieure à 168 et non supérieure à 335 est sélectionnée aléatoirement comme séquence de synchronisation du nœud ;
dans lequel X1 et X2 sont des entiers positifs supérieurs ou égaux à 1, l'ensemble id_net est un ensemble de séquences de synchronisation dans la couverture réseau, et l'ensemble id_oon est un ensemble de séquences de synchronisation en dehors de la couverture réseau.

2. Procédé selon la revendication 1, dans lequel lorsque la priorité de synchronisation du nœud est la première priorité prédéterminée, la séquence de synchronisation du nœud est configurée par l'eNB par le biais d'informations système.

3. Dispositif de synchronisation, étant un nœud d'un système de communication de véhicule à véhicule, V2V, dans lequel le système de communication V2V comprend un schéma de synchronisation par système de géolocalisation et navigation par satellites, GNSS, et un schéma de synchronisation par Node B évolué, eNB, **caractérisé en ce que** le dispositif comprend :
une première unité (11) configurée pour déterminer une priorité de synchronisation du nœud en fonction d'un signal de synchronisation reçu par le nœud ; et
une seconde unité (12) configurée pour déterminer une séquence de synchronisation du nœud et une valeur d'un indicateur distinctif du nœud pour un signal de synchronisation à envoyer par le nœud en fonction de la priorité de synchronisation du nœud, dans lequel l'indicateur distinctif est configuré pour indiquer que le nœud appartient au schéma de synchronisation GNSS ou au schéma de synchronisation eNB ;
dans lequel la première unité (11) est configurée pour : déterminer que la priorité de synchronisation du nœud est une première priorité prédéterminée, une deuxième priorité prédéterminée, une troisième priorité prédéterminée, ou une quatrième priorité prédéterminée en fonction du signal de synchronisation ;
la seconde unité (12) est configurée pour :
lorsque la priorité de synchronisation du nœud est la première priorité prédéterminée, déterminer que la séquence de synchronisation du nœud est une séquence de synchronisation dans un ensemble id_net excluant X1-168 et X2-168, et déterminer que la valeur de l'indicateur distinctif du nœud est Vrai ;
lorsque la priorité de synchronisation du nœud est la deuxième priorité prédéterminée, déterminer que la séquence de synchronisation du nœud est une séquence de synchronisation X1 dans un ensemble id_oon, et déterminer que la valeur de l'indicateur distinctif du nœud est Faux ;
lorsque la priorité de synchronisation du nœud est la troisième priorité prédéterminée, déterminer que la séquence de synchronisation du nœud est une séquence de synchronisation X2 dans l'ensemble id_oon, et déterminer que la valeur de l'indicateur de distinction du nœud est Faux ; et
lorsque la priorité de synchronisation du nœud est la quatrième priorité prédéterminée, déterminer que la valeur de l'indicateur distinctif du nœud est Faux, et déterminer la séquence de synchronisation du nœud selon l'un des schémas suivants :
selon un premier schéma, si un nœud de référence de synchronisation du nœud a la première priorité prédéterminée, alors la séquence de synchronisation du nœud est la même séquence qu'une séquence de synchronisation du nœud de référence de synchronisation, ou la séquence de synchronisation du nœud est égale à la séquence de synchronisation du nœud de référence de synchronisation plus 168 ;
selon un deuxième schéma, si le nœud de référence de synchronisation du nœud a la troisième priorité prédéterminée, alors la séquence de synchronisation du nœud est définie à une valeur fixe X3 ;
selon un troisième schéma, si le nœud de référence de synchronisation du nœud a la quatrième priorité prédéterminée, alors :
si la séquence de synchronisation du nœud de référence de synchronisation appartient à l'ensemble id_net, alors la séquence de synchronisation du nœud est égale à la séquence de synchronisation du nœud de référence de synchronisation plus 168 ; ou si la séquence de synchronisation du nœud de référence de synchronisation appartient à l'ensemble id_oon, alors la séquence de synchronisation du nœud de référence de synchronisation est la même que la séquence de synchronisation du nœud de référence de synchronisation ; et
selon un quatrième schéma, si le nœud fonctionne en tant que source de synchronisation indépendante, alors une valeur non inférieure à 168 et non supérieure à 335 est sélectionnée aléatoirement comme séquence de synchronisation du nœud, la valeur n'étant pas égale à X1 ni à X2 ;
ou
la seconde unité (12) est configurée pour :
lorsque la priorité de synchronisation du nœud est la première priorité prédéterminée, déterminer que la séquence de synchronisation du nœud est une séquence de synchronisation dans un ensemble id_net excluant X1 et X2, et déterminer que la valeur de l'indicateur distinctif du nœud est Faux ;
lorsque la priorité de synchronisation du nœud est la deuxième priorité prédéterminée, déterminer que la séquence de synchronisation du nœud est la séquence de synchronisation X1 dans l'ensemble id_net, et déterminer la valeur de l'indicateur distinctif du nœud est Vrai ;
lorsque la priorité de synchronisation du nœud est la troisième priorité prédéterminée, déterminer que la séquence de synchronisation du nœud est la séquence de synchronisation X2 dans l'ensemble id_net, et déterminer que la valeur de l'indicateur distinctif du nœud est Vrai ; et
lorsque la priorité de synchronisation du nœud est la quatrième priorité prédéterminée, déterminer que la valeur de l'indicateur distinctif du nœud est Vrai, et déterminer la séquence de synchronisation du nœud selon l'un des schémas suivants :
selon un premier schéma, si un nœud de référence de synchronisation du nœud a la première priorité prédéterminée, alors la séquence de synchronisation du nœud est une séquence de synchronisation dans l'ensemble id_net, et la séquence de synchronisation du nœud est la même qu'une séquence de synchronisation du nœud de référence de synchronisation, ou la séquence de synchronisation du nœud est une séquence de synchronisation dans un ensemble id_oon, et la séquence de synchronisation du nœud est égale à la séquence de synchronisation du nœud de référence de synchronisation plus 168 ;
selon un deuxième schéma, si le nœud de référence de synchronisation du nœud a la troisième priorité prédéterminée, alors la séquence de synchronisation du nœud est une séquence de synchronisation de l'ensemble id_oon, et la séquence de synchronisation du nœud est égale à une valeur fixe de X2+168 ;
selon un troisième schéma, si le nœud de référence de synchronisation du nœud a la quatrième priorité prédéterminée, alors :
si la séquence de synchronisation du nœud de référence de synchronisation appartient à l'ensemble id_net, alors la séquence de synchronisation du nœud est une séquence de synchronisation dans l'ensemble id_oon, et la séquence de synchronisation du nœud est égale à la séquence de synchronisation du nœud de référence de synchronisation plus 168 ; ou si la séquence de synchronisation du nœud de référence de synchronisation appartient à l'ensemble id_oon, alors la séquence de synchronisation du nœud est la même que la séquence de synchronisation du nœud de référence de synchronisation ; et
selon un quatrième schéma, si le nœud fonctionne en tant que source de synchronisation indépendante, alors une valeur non inférieure à 168 et non supérieure à 335 est sélectionnée aléatoirement comme séquence de synchronisation du nœud ;
dans lequel X1 et X2 sont des entiers positifs supérieurs ou égaux à 1, l'ensemble id_net est un ensemble de séquences de synchronisation dans la couverture réseau, et l'ensemble id_oon est un ensemble de séquences de synchronisation en dehors de la couverture réseau.

4. Dispositif selon la revendication 3, dans lequel lorsque la priorité de synchronisation du nœud est la première priorité prédéterminée, la séquence de synchronisation du nœud, déterminée par la seconde unité (12), est configurée par l'eNB par le biais d'informations système.
